# EUROPEAN PATENT SPECIFICATION

(11) **EP 2 640 200 B1**
(45) Date of publication and mention of the grant of the patent: **16.12.2020**
(21) Application number: 11773735.3
(22) Date of filing: 25.10.2011
(51) Int. Cl.: A23P 10/30, A23L 33/00, A23L 33/12, A23L 33/135, A23L 33/155, A23L 33/16, A23L 33/15

(54) **AGE-TAILORED NUTRITIONAL FORMULA WITH PARTICULARLY ADAPTED CALORIC DENSITY FOR YOUNG INFANTS**
ALTERSANGEPASSTE ERNÄHRUNGSFORMEL MIT SPEZIELL ANGEPASSTER KALORISCHER DICHTE FÜR SÄUGLINGE
PRÉPARATION NUTRITIVE ADAPTÉE À L'ÂGE PRÉSENTANT UNE DENSITÉ ÉNERGÉTIQUE CONVENANT PARTICULIÈREMENT AUX JEUNES ENFANTS

(30) Priority: 15.11.2010 EP 10191205
(43) Date of publication of application: 25.09.2013
(73) Proprietor: Société des Produits Nestlé S.A., 1800 Vevey (CH)
(72) Inventor: KLASSEN, Petra, CH-1806 St Legier (CH); MAGLIOLA, Corinne, CH-1009 Pully (CH)
(74) Representative: Corticchiato, Olivier
(86) International application number: PCT/EP2011/068613
(87) International publication number: WO 2012/065813

(56) References cited:
- EP-A1- 1 932 437
- EP-A1- 1 974 734
- EP-A1- 1 974 735
- EP-A1- 2 143 341
- WO-A1-2004/112507
- WO-A1-2004/112508
- WO-A1-2007/135141
- WO-A1-2008/054192
- WO-A1-2008/153377
- WO-A1-2009/068549
- WO-A1-2010/027258
- WO-A1-2010/066569
- WO-A2-2007/073192
- WO-A2-2008/145375
- US-A1- 2009 175 979

## Description

### Field of invention

The present invention relates to nutritional formulae which are specifically designed to address the needs of infants and young children of at least 6 months of age. In particular, the invention provides a set of nutritional compositions for the infants and young children, each nutritional composition having an age-specific caloric density. The set of nutritional compositions is specifically aimed at providing long-term benefits to the infants and young such as reducing obesity, reducing cardiovascular diseases and reducing metabolic disorders associated with obesity later in life.

### Background of invention

Infant formulae, follow-up formulae and grown-up milks which may be aimed at different age groups of 0 to 6 months, 6 months to 1 year and 1 year to 3 years respectively, are known. These infant formulae, follow-up formulae and grown-up milks aim to meet the requirements of infants and young children at the different ages.

An age-tailored nutrition system for infants is described in WO 2009/068549, wherein a protein nature and content are adapted to specific age groups.

Published documents WO2007073192A2 of Nutricia NV, WO2008054192A1 of Nutricia BV, WO2010066569A1 of Nestec SA, EP194735A1 of Nestec SA, EP1974734A1 of Nestec SA, EP1032437A1 of Nestec SA, WO2004112508A1 of Nestec SA, WO2004112507A1 of Nestec SA, WO2008153377A1 of Nutricia NV, WO200814375A2 of Nestec SA, WO2010027258A1 of Nutricia NV, US2009175979A1 of Singhal Atul and Lucas Alan (University of London / GB), EP2143341A1 of Nestec SA, and WO2007135141A1 of Nestec SA, all describe nutritional compositions, like infant formulas, or sets of nutritional compositions, with various levels of nutrients which may have beneficial effects on infants or children.

The recommended World Health Organisation (WHO) and Codex Alimentarius Commission guidelines for infant formulae and follow-up formulae state that the infant formulae and follow-up formulae shall not provide less than 60kcal /100mL and not more than 85 kcal/100mL. Generally, conventional infant formulae and follow-up formulae tend to provide about 67kcal/100mL.

There is generally a tendency to overfeed infants and young children. Usually also, the infant formulae and/or follow-up formulae dosage and caloric density do not take into consideration the complementary food eaten by infants and young children when overfeeding the infants and young children.

It is known that a rapid growth of infants and young children increases a risk of obesity in later childhood or adulthood (see Baird et al.; Being big or growing fast: systematic review of size and growth in infancy and later obesity. BMJ. 2005;331(7522):929.). Infant formulas need to reduce the risk of obesity in later childhood or adulthood.

Experiments in animals have shown that modification in energy intake in the first weeks of life has a lifelong effect on weight gain even if normal energy intake was restored afterwards in later life (see Widdowson EM and McCance RA The effect of finite periods of under nutrition at different ages on the composition and subsequent development of the rat. Proc R Soc Lond B Biol Sci 1963 (1); 158:329-342)

A number of studies indicate that nutrition in early postnatal life has an impact on long-term appetite regulation. For example, overfeeding rat pups results in altered appetite control with development of hyperphagia in adulthood of the rats (see Davidowa H, Plagemann A; Hypothalamic neurons of postnatally overfed, overweight rats respond differentially to corticotropin-releasing hormones. Neurosci Lett. 2004 Nov 16;371(1):64-8).

There is a need to provide a more balanced diet to infants and young children. The diet should promote health benefits in the long term to the infants and young children.

There is a need to provide a nutritional system that enalbles the convenient, safe and accurate delivery of the most adequate nutrition all along the first months or years of the life of a baby.

There is need to provide a way to insure that the best adequate individual nutritional solutions are made available to infants and their care-givers, in order to promote health benefits that may not be immediately visible but which consequences occur later in life.

There is a need to provide such cited nutritional compositions, especially during the first 6 months of life, that can help insuring best growth and reduction of risk of health conditions later in life, such as cardiovascular diseases, diabetes, obesity, metabolic syndrome, or depressed immunity.

There is a need to provide a nutritional system that encompasses more than the first few months of life and acknowledge the introduction of complementary food (.i.e. non infant formula) in the diet of the babies, while insuring best growth and reduction of risk of health conditions later in life, such as cardiovascular diseases, diabetes, obesity, metabolic syndrome, or depressed immunity.

There is a need for an early-in-life nutritional intervention or control in order to deliver health benefits later-in-life.

### Object of invention

An object of the present invention is to ensure a balanced nutritional intake in infants and young children all along the first weeks, months or years of the growth and development of infant especially up to an age of at least 6 months of age.

It is also an aim of the present invention to provide long-term health benefits to infants and young children.

### Summary of invention

The objects of the invention are solved by means of the independent claims. The dependent claims further develop the central idea of the invention.

Thus, in a first aspect, the present invention relates to a set of nutritional compositions for infants and young children.

The set of nutritional compositions for infants and young children comprises at least a first composition for infants and young children between 0 and 4 weeks of age having a caloric density of between more than 66 and 69 kcal/100mL, a second composition for infants and young children between 4 and 8 weeks of age having a caloric density of between 63 and 66 kcal/100mL and a third composition for infants and young children from between 3 and 6 months of age having a caloric density of between 61 and 64.5 kcal/100mL.

The energy density of the first composition is higher than the energy density of the second composition, and the energy density of the second composition is higher than the energy density of the third composition.

The invention extends to a set of nutritional composition for infants and young children for use in reducing overweight or obesity later in life or for use in reducing cardiovascular diseases and metabolic disorders associated with obesity later in life.

In a further aspect a method for providing nutrition to infants and young children in at least first 6 months of life is disclosed. The method comprises feeding to an infant a set of nutritional compositions according to any of claims 1 to 12 at the corresponding ages.

In a further aspect, the invention pertains to an age-tailored nutrition kit for infants and young children. The age-tailored nutrition kit comprises a set of nutritional compositions according to any of claims 1 to 12, wherein the nutritional compositions are packed in single dose units, preferably capsules, each single dose unit comprising sufficient nutritional composition to prepare a single serving upon reconstitution with water.

### Detailed description of the invention

For a complete understanding of the present invention and the advantages thereof, reference is made to the following detailed description of the invention.

In the present description, the following words are given a definition that should be taken into account when reading and interpreting the description, examples and claims.

Infant: according to the Commission Directive 2006/141/EC of 22 December 2006 on infant formulae and follow-on formulae, article 1.2 (a), the term "infants" means children under the age of 12 months.

Young Children: according to the Commission Directives 2006/141/EC of 22 December 2006 and/or 91/321/EEC of 14 May 1991 on infant formulae and follow-on formulae, article 1.2 (b), the term "young children" means children aged between one and three years.

Infant formulae: according to the Commission Directives 2006/141/EC of 22 December 2006 and/or 91/321/EEC of 14 May 1991 on infant formulae and follow-on formulae, article 1.2 (c), the term "infant formula" means foodstuffs intended for particular nutritional use by infants during the first four to six months of life and satisfying by themselves the nutritional requirements of this category of persons. It has to be understood that infants can be fed solely with infant formulas, or that the infant formula can be used by the carer as a complement of human milk. It is synonymous to the widely used expression "starter formula".

Follow-on formulae: according to the Commission Directives 2006/141/EC of 22 December 2006 and/or 91/321/EEC of 14 May 1991 on infant formulae and follow-on formulae, article 1.2 (d), the term "follow-on formulae" means foodstuffs intended for particular nutritional use by infants aged over four months and constituting the principal liquid element in a progressively diversified diet of this category of persons.

Probiotic: according to the paper Probiotics in Man and Animals, J. Appl Bacteriol. 66: 365-378, a probiotic is defined as a live microbial feed supplement which beneficially affects the host animal by improving its intestinal microbial balance.
The present invention relates to a set of nutritional compositions for infants and young children. The set is made up of at least three nutritional compositions aimed to at least three different age groups.

The nutritional compositions are preferably in the form of a powder to be reconstituted or the nutritional compositions are in the form of a concentrate to be diluted. The powder or concentrate can be reconstituted or diluted with water. The end product is thus preferably a liquid.

The set of nutritional compositions comprises a first composition for infants and young children between an age of 0 and 4 weeks. The first composition has a caloric density of between more than 66 and 69 kcal/100mL. It is preferable that the caloric density of the first composition is
67 kcal/100ml.

The set of nutritional compositions further comprises a second composition for infants and young children between an age of 4 and 8 weeks of age. The second composition having a caloric density of between 63 and 66 kcal/100mL. It is preferable that the caloric density of the second composition is
65 kcal/100ml.

The set further comprises a third composition for infants and young children between 3 and 6 months. The third composition has a caloric density of between 61 and 64.5 kcal/100mL. It is preferable that the caloric density of the third composition is between 61 and 63 kcal/100mL. Most preferably at 63 kcal/100ml.

The set optionally comprises a fourth composition for infants and young children between 7 and 12 months of age. The fourth composition has a caloric density of between 61.5 and 64.5 kcal/100mL. It is preferable that the caloric density of the fourth composition is between 61 and 63 kcal/100mL. Most preferably at 63 kcal/100ml.

The set further comprises a fifth composition when the fourth composition is used. The fifth composition is for infants and young children between 13 and 24 months of age. The fifth composition has a caloric density of between 61 and 65 kcal/100mL. It is preferable that the caloric density of the fifth composition is between 61 and 63 kcal/100mL. Most preferably at 63 kcal/100ml.

Typically, the compositions forming part of the set of nutritional compositions comprise any of a source of fat, proteins and/or carbohydrates or any mixtures thereof.

The energy density of the first composition is higher than the energy density of the second composition. In one embodiment it is higher than the energy density of the second and third compositions.

The energy density of the second composition is higher than the energy density of the third composition. In one embodiment it is higher than the energy density of the optional 4^{th} and/or of the optional 5^{th} composition.

In one embodiment the energy density of the optional fourth and/or fifth compositions is lower than the energy density of the first and/or second and/or third compositions.

It is believed that the strict control of the energy intake over time can lead to health benefits later in life. As such the solution of the proposed invention is particularly tailored to (a) provide sufficient energy for growth, (b) while lowering the energy intake after the first 4 weeks to avoid overgrowth (c) while somewhat lowering the energy intake after 2^{nd} months to avoid overgrowth, (d) maintaining then a about constant energy density in the 3^{rd}, 4^{th} and 5^{th} compositions in order to take into account the complementary food supplied to the babies.

It is believed that the complementary food is a nutritional factor that has been so far under-accounted for in the typical nutritional schemes.

The fat in the set of nutritional compositions may be selected from milk and/or vegetable fat. Typical vegetable fats include palm olein, high oleic sunflower oil, high oleic safflower oil or any mixtures thereof. The fats are a source of long-chain polyunsaturated fatty acids (LC-PUFA) . LC-PUFA's have been linked to benefits in infant/young child development. Preferably, the LC-PUFA are selected from docosahexaenoic acid (DHA), arachidonic acid (ARA) or any mixtures thereof. Most preferably, the first, second and third nutritional compositions comprise a mixture of DHA and ARA. Most preferably, the fourth and fifth compositions comprise docosahexaenoic acid DHA only. Where both DHA and ARA are present it is preferable that each composition comprises from 0.14 to 0.16g/100g powder of DHA and 0.14 to 0.15 g/100g powder of ARA.

A fat content of the first composition is preferably between 48 and 54%, more preferably between 50 and 52% of the total energy for the first composition.

A fat content of the second composition is preferably between 48 and 54%, more preferably between 50 and 54% of the total energy for the second composition.

A fat content of the third composition is preferably between 48 and 54%, more preferably between 50 and 54% of the total energy for the third composition.

A fat content of the fourth composition is preferably between 35 and 45%, more preferably between 35 and 40% of the total energy for the fourth composition.

A fat content of the fifth composition is preferably between 35 and 45%, more preferably between 40 and 45% of the total energy for the fifth composition.

In one embodiment of the invention the fat content of the fourth and fifth composition is lower (in absolute value and/or as % of the total energy) than the fat content of the first three compositions. The inventors believe that the supply of the adequate fat content during the first weeks or months (i.e. in the first 3 composition)is better leveraged when coupled with a lower fat content in the later years (i.e. 4^{th} and 5^{th} compositions), when complimentary food is also introduced. In this way the most adequate fat content is delivered over a longer period of time. It is believed that it can be linked to health benefits over time such as lowering the risk of obesity, of cardio vascular diseases, of metabolic syndrome or even diabetes later in life.

In one embodiment the fat content of the optional fifth composition (in absolute value and/or as % of total energy) is lower than the fat content in the 1^{st}, and/or 2^{nd}, and/or 3^{rd} and/or 4^{th} compositions. It is believed that this better takes into account the nutritional boost supplied by the complementary food at that age.

The carbohydrates in the set of nutritional compositions may include lactose, saccharose, maltodextrin, starch and mixtures thereof. In a preferred embodiment, the first and second compositions comprise lactose. Preferably, the amount of lactose in the first and second compositions is between 9.5 and 12 g/100 kcal, preferably between 10 and 11 g/100kcal. The third and fourth compositions preferably comprise a mixture of lactose and maltodextrin. Preferably, the maltodextrin has a DE of 19. Most preferably, the ratio of lactose to maltodextrin in the third and fourth compositions is 70:30. In one embodiment the carbohydrate source in all compositions comprises or is lactose.

A carbohydrate content of the set of nutritional compositions is as preferably as follows. The carbohydrate content of the first composition is between 35% and 48% of the total energy for said first composition. The carbohydrate content of the second composition is between 40% and 45% of the total energy for said second composition. The carbohydrate content of the third composition is between 42% and 48% of the total energy for said third composition. The carbohydrate content of the fourth composition is between 45% and 60% of the total energy for said fourth composition. The carbohydrate content of the fifth composition is between 50% and 60% of the total energy for said fifth composition.

It is believed that the relative high carbohydrate content in the 4^{th} and/or 5^{th} composition are best suited to deliver the form of "fast" energy needed at this age, without promoting the fat accumulation.

The proteins if present in the set of nutritional compositions may include intact or hydrolysed protein, milk fat globule membrane (MFGM) protein, casein, whey, soy protein, rice proteins or any mixtures thereof. In a preferred embodiment, the compositions comprise a mixture of whey and casein. Preferably, the ratio of whey to casein in the first composition is 70:30. The second and third compositions preferably have a protein ratio of whey:casein of 50:50. Preferably, the fourth composition has a whey to casein protein ratio of 40:60. The protein content in the compositions preferably varies between 1.5 to 2.5 g/100kcal. For instance, the first composition may comprise a protein content of 1.8 to 2.25 g/100kcal. The second composition may comprise a protein content of 1.8 g/100kcal. The third composition may comprise a protein content of 2 g /100kcal. The protein content of the fourth composition is preferably 2.25 g/100kcal. The protein content of the fifth composition is preferably 2.5 g/100kcal.

The compositions are adapted to meet the evolving nutrient requirements of infants and young children. A protein density of the compositions change in the various age groups, to mimic the evolution of human breast milk. The protein density of the compositions is highest during the first two months when growth is fastest, and decreases until the 6th month of life. The protein density of the compositions then remains constant and increases again after the first year of life. Especially for older age groups (1 to 2 and 2 to 3 years). The protein density of the compositions are significantly lower than that what is naturally found in cow's milk (5 g/100 kcal) in order to avoid protein excess. It is believed that a control of the protein density of the compositions helps maintaining the infant in normal growth curves and has effect later in life for the reduction of obesity and excess weight.

The compositions, which form the set of nutritional compositions, provide a caloric density which better meets the needs of infants and young children at different ages. In particular, the caloric density of the second composition is lower than the conventional compositions aimed for this age group. Conventional compositions such as Nan 2, Lactogen 2, sold by Nestle (Vevey, Switzerland) in many countries) which are aimed at infants of 6 months to 1 year typically have a caloric density of 67 kcal/100mL.

It has been found that set of nutritional compositions when administered to infants and young children provides long-term benefits. In particular, the beneficial effects include reduction of obesity later in life.

Other health benefits associated with the set of nutritional compositions include a growth within the usually accepted growth curves (from weight gain or size growth or combination thereof), the reduction of occurrence of diabetes, especially type II diabetes and better immune status (including less bacterial and/or viral infections), and/or less allergies.

Further benefits also include the reduction of cardiovascular diseases later in life, hypertension and renal dysfunction

The beneficial health effects can be measured for their reduced frequency of occurrence and/or for their attenuated symptoms when they occur and/or their low negative health impact (i.e. intensity of effect). This is defined in comparison to the average occurrence/ frequency/intensity of the health effects/status in the general population.

The long term health effect and/or the effect "later in life" are evidenced at a certain time after the diet of the invention has been stopped. Typically such beneficial health effects are expected to be seen (scientifically measurable) 1, 2, 5, 7, 10, 15, 20 or 40 years after having stopped the claimed set of compositions. In one embodiment these times are the time when the health effects start to the observed and the health effect continue to be measurable for a period of 1, 3, 5, 10, 15, 20, 30 additional years.

The health effects can hence be measurable at the age of 2, 3, 4, 5, 7, 10, 13, 15, 18, 20, 25, 30, 35, 40, 45, 50, or 60. In one embodiment the health effects can be measurable from these respective ages and for a period of 1, 3, 5, 10, 15, 20, 30 additional years. The health effect is an increase life expectancy of 1 week, 2 weeks, 1 month, 3 months, 6 months, or 1,2,3,4,5,10 years in comparison to the relevant general population.

For example the infants receiving the claimed set of compositions can be shown to experience beneficial health effect at the age of 7 or 10 and/or 5 or 7 years after having stopped the claims diet.

It has further been found that the nutritional compositions of set of nutritional compositions work in synergy such that optimal health effects are observed when the nutritional compositions are used consequently. Therefore, using the nutritional compositions independently (i.e. not as part of the set of nutritional compositions) would not achieve the beneficial effects to the same extent. One can understand that the long term effect is the set of nutritional compositions is better capitalized when the individual compositions are used over a long period of time (for example during at least the first 2 or 3 years of life) and on a regular basis for example when the use of the composition of the invention cover 30% or more, 50% or more, 75% or more 90% or more, 95% or more of the daily caloric intake of the child. The long term effect can be evidenced by measuring parameters such as the body weight (and/or growth curve by mass), the body size, occurrence (frequency) of obesity-related conditions or diseases and the like.

Optionally, the compositions may comprise vitamins selected from vitamin A, beta-carotene, vitamin D, vitamin E, vitamin K1, vitamin C, vitamin B1, vitamin B2, niacin, vitamin B6, folic acid, pantothenic acid, vitamin B12, biotin, choline, inositol, taurine, carnitine or any mixtures thereof.

Additionally, the compositions may comprise minerals selected from sodium, potassium, chloride, calcium, phosphorus, magnesium, manganese or any mixtures thereof.

Trace elements such as iron, iodine, copper, zinc, selenium, fluorine, chromium, molybdenum or any mixtures thereof may also be present in the compositions forming the set of nutritional compositions.

In a preferred embodiment, any of the compositions forming part of the set may comprise lactoferrin.

Additionally, any of the compositions may comprise prebiotics. A prebiotic is a non-digestible food ingredient that beneficially affects the host by selectively stimulating the growth and/or activity of one or a limited number of bacteria in the colon and thus improves host health. Such ingredients are non-digestible in the sense that they are not broken down and absorbed in the stomach or small intestine and thus pass intact to the colon where they are selectively fermented by the beneficial bacteria. Prebiotics are preferably added to the compositions of the later age groups (1 to 2 years and 2 to 3 years). In this instance the prebiotics reinforce the immune system, improve gastrointestinal comfort, and prevent discomfort that may arise from diarrhoea.

Examples of prebiotics include certain oligosaccharides, such as fructooligosaccharides (FOS) and galactooligosaccharides (GOS). A combination of prebiotics may be used such as 90% GOS with 10% short chain fructooligosaccharides such as the product sold under the trade mark Raftilose® or 10% inulin such as the product sold under the trade mark Raftiline®. A particularly preferred prebiotic is a mixture of galacto-oligosaccharide(s), N-acetylated oligosaccharide(s) and sialylated oligosaccharide(s) in which the N- acetylated oligosaccharide(s) comprise 0.5 to 4.0% of the oligosaccharide mixture, the galacto-oligosaccharide(s) comprise 92.0 to 98.5% of the oligosaccharide mixture and the sialylated oligosaccharide(s) comprise 1.0 to 4.0% of the oligosaccharide mixture. This mixture is hereinafter referred to as "CMOS-GOS".

Preferably, any of the compositions of the set for the invention contain from 2.5 to 15.0 wt% CMOS-GOS on a dry matter basis with the proviso that the composition comprises at least 0.02 wt% of an N- acetylated oligosaccharide, at least 2.0 wt% of a galacto-oligosaccharide and at least 0.04 wt% of a sialylated oligosaccharide.

Suitable N-acetylated oligosaccharides include GalNAcα1,3Galβ1,4Glc and Galβ1,6GalNAcα1,3Galβ1,4Glc. The N-acetylated oligosaccharides may be prepared by the action of glucosaminidase and/or galactosaminidase on N-acetyl-glucose and/or N-acetyl galactose. Bqually, N-acetyl-galactosyl transferases and/or N-acetyl-glycosyl transferases may be used for this purpose. The N-acetylated oligosaccharides may also be produced by fermentation technology using respective enzymes (recombinant or natural) and/or microbial fermentation. In the latter case the microbes may either express their natural enzymes and substrates or may be engineered to produce respective substrates and enzymes. Single microbial cultures or mixed cultures may be used. N-acetylated oligosaccharide formation can be initiated by acceptor substrates starting from any degree of polymerisation (DP) from DP=1 onwards. Another option is the chemical conversion of keto-hexoses (e.g. fructose) either free or bound to an oligosaccharide (e.g. lactulose) into N-acetylhexosamine or an N-acetylhexosamine containing oligosaccharide as described in Wrodnigg, T. M.; Stutz, A.E. (1999) Angew. Chem. Int. Ed. 38:827-828.

Suitable galacto-oligosaccharides include Galβ1, 6Gal, Galβ1,6Galβ1,4Glc, Galβ1,6Galβ1,6Glc, Galβ1,3Galβ1,3Glc, Galβ1,3Galβ1,4Glc, Galβ1,6Galβ1,6Ga1β1,4Glc, Galβ1,6Galβ1,3Galβ1,4Glc, Galβ1,3Galβ1,6Galβ1,4Glc, Galβ1, 3Galβ1,3Galβ1,4Glc, Galβ1,4Galβ1,4Glc and Galβ1,4Galβ1,4Galβ1,4Glc.

Synthesised galacto-oligosaccharides such as Galβ1,6Galβ1, 4Glc, Galβ1,6Galβ1,6Glc, Galβ1,3Galβ1,4Glc, Galβ1,6Galβ1,6Galβ1,4Glc, Galβ1,6Galβ1,3Galβ1,4Glc and Galβ1,3Galβ1,6Galβ1,4Glc, Galβ1,4Galβ1,4Glc and Galβ1,4Galβ1,4Galβ1,4Glc and mixtures thereof are commercially available under the trademarks Vivinal® and Elix'or®. Other suppliers of oligosaccharides are Dextra Laboratories, Sigma-Aldrich Chemie GmbH and Kyowa Hakko Kogyo Co.,Ltd. Alternatively, specific glycosyltransferases, such as galactosyltransferases may be used to produce neutral oligosaccharides.

Suitable sialylaled oligosaccharides include NeuAcα2, 3Galβ1, 4Glc and NeuAcα2, 6Galβ1, 4Glc. These sialylated oligosaccharides may be isolated by chromatographic or filtration technology from a natural source such as animal milks. Alternatively, they may also be produced by biotechnology using specific sialyltransferases either by enzyme based fermentation technology (recombinant or natural enzymes) or by microbial fermentation technology. In the latter case microbes may either express their natural enzymes and substrates or may be engineered to produce respective substrates and enzymes. Single microbial cultures or mixed cultures may be used. Sialyl-oligosaccharide formation can be initiated by acceptor substrates starting from any degree of polymerisation (DP) from DP=1 onwards.

The prebiotics are preferably present in the compositions in an amount 1 to 20wt%, preferably 2 to 15wt% on a dry matter basis.

The compositions may contain other beneficial substances. The beneficial substances can be nucleotides and/or nucleosides. Nucleotides may be selected from cytidine monophosphate (CMP), uridine monophosphate (UMP), adenosine monophosphate (AMP), guanosine monophosphate (GMP) or any mixtures thereof.

Any of the nutritional compositions may also comprise at least one probiotic bacterial strain.

In one embodiment only the first and second composition comprises probiotics.

The probiotics establish a healthy gut microbiota and strengthen natural immune defenses. The probiotics also stimulate a development of the immune system at introduction of weaning food and prevent diarrhea.

Examples of suitable probiotic micro-organisms include yeasts such as *Saccharomyces, Debaromyces, Candida, Pichia* and *Torulopsis,* moulds such as *Aspergillus, Rhizopus, Mucor,* and *Penicillium* and *Torulopsis* and bacteria such as the genera *Bifidobacterium, Bacteroides, Clostridium, Fusobacterium, Melissococcus, Propionibacterium, Streptococcus, Enterococcus, Lactococcus, Staphylococcus, Peptostrepococcus, Bacillus, Pediococcus, Micrococcus, Leuconostoc, Weissella, Aerococcus, Oenococcus* and *Lactobacillus.* Specific examples of suitable probiotic micro-organisms are: *Saccharomyces cereviseae, Bacillus coagulans, Bacillus licheniformis, Bacillus subtilis, Bifidobacterium bifidum, Bifidobacterium infantis, Bifidobacterium longum, Enterococcus faecium, Enterococcus faecalis, Lactobacillus acidophilus, Lactobacillus alimentarius, Lactobacillus casei subsp. casei, Lactobacillus casei Shirota, Lactobacillus curvatus, Lactobacillus delbruckii subsp. lactis, Lactobacillus farciminus, Lactobacillus gasseri, Lactobacillus helveticus, Lactobacillus johnsonii, Lactobacillus reuteri, Lactobacillus rhamnosus (Lactobacillus GG), Lactobacillus sake, Lactococcus lactis, Micrococcus varians, Pediococcus acidilactici, Pediococcus pentosaceus, Pediococcus acidilactici, Pediococcus halophilus, Streptococcus faecalis, Streptococcus thermophilus, Staphylococcus carnosus,* and *Staphylococcus xylosus.*

Preferred probiotic bacterial strains include *Lactobacillus rhamnosus* ATCC 53103 obtainable from Valio Oy of Finland under the trade mark LGG, *Lactobacillus rhamnosus* CGMCC 1.3724, *Lactobacillus paracasei* CNCM 1-2116, *Lactobacillus reuteri* ATCC 55730 and *Lactobacillus reuteri* DSM 17938 obtainable from BioGaia AB, *Bifidobacterium lactis* CNCM 1-3446 sold *inter alia* by the Christian Hansen company of Denmark under the trade mark Bb 12 and *Bifidobacterium longum* ATCC BAA-999 sold by Morinaga Milk Industry Co. Ltd. of Japan under the trade mark BB536.

The amount of probiotic, if present, likewise preferably varies as a function of the age of infants and young children. Generally speaking, the probiotic content may increase with increasing age of the infant for example from 10³ to 10¹² cfu/g composition, more preferably between 10⁴ and 10⁸ cfu/g composition (dry weight). In a preferred embodiment, any of the nutritional compositions of the set comprise 2x10⁷ cfu/g or 2x10⁸ cfu/g. Most preferably, the probiotic is *Bifidobacterium lactis. In one embodiment the probiotic comprises L. Reuteri.*

The nutritional compositions may be prepared in any suitable manner. For example, an infant formula may be prepared by blending together a protein source, a carbohydrate source, and a fat source in appropriate proportions. If used, emulsifiers may be included in the blend. Any additional vitamins and minerals may be added at this point but are usually added later to avoid thermal degradation. Any lipophilic vitamins, emulsifiers and the like may be dissolved into the fat source prior to blending. Water, preferably water which has been subjected to reverse osmosis, may then be mixed in to form a liquid mixture.

The liquid mixture may then be thermally treated to reduce bacterial loads. For example, the liquid mixture may be rapidly heated to a temperature in the range of about 80°C to about 110°C for about 5 seconds to about 5 minutes. This may be carried out by steam injection or by heat exchanger; for example a plate heat exchanger. The liquid mixture may then be cooled to about 60°C to about 85°C for example by flash cooling. The liquid mixture may then be homogenised for example in two stages at about 7 MPa to about 40 MPa in the first stage and about 2 MPa to about 14 MPa in the second stage. The homogenised mixture may then be further cooled to add any heat sensitive components such as vitamins and minerals. The pH and solids content of the homogenised mixture are conveniently standardised at this point.

The homogenised mixture is transferred to a suitable drying apparatus such as a spray drier or freeze drier and converted to powder. The powder should have a moisture content of less than about 3% by weight. Alternatively, the homogenised mixture is concentrated.

If it is desired to add probiotic(s), they may be cultured according to any suitable method and prepared for addition to the infant formula by freeze-drying or spray-drying for example. Alternatively, bacterial preparations can be bought from specialist suppliers such as Christian Hansen and Morinaga already prepared in a suitable form for addition to food products such as infant formula. Such bacterial preparations may be added to the powdered infant formula by dry mixing.

The set of nutritional compositions is used for feeding infants and young children for at least the first two years of life. Thus, the invention also relates to a method for providing nutrition to infants and young children in at least the first two years of life. The method comprises feeding to infants and young children the set of nutritional compositions described herein at the corresponding ages.

In an embodiment of the invention, the nutritional compositions are packed in single dose units. Each single dose unit comprises sufficient nutritional composition to prepare a single serving upon reconstitution with water.

A serving typically provides an infant or young child with 65 or 100 to 200 kcal. Thus, a single serving generally comprises between 11 and 30 g of powder to be reconstituted with water. Alternatively, if the nutritional composition is a concentrate, a single serving includes 30 to 70 mL of concentrate to be diluted with 100ml to 200ml mL of water.

The set of the invention is also used for providing infants and young children with a balanced nutritional diet for at least 6 months or the first two years of life.

Preferably the set of the invention promotes the compliance of the care-givers to the nutritional scheme proposed by the present invention, along an extended period of time (e.g. 2 years) in order to capitalize the long term health benefits recited therein. Preferably, and most importantly, however the care-givers must be provided with the choice and information for varying the diet of the infants according to their specific needs, perceived needs or medical conditions.

Another facet of the invention therefore relates to an infants and young children nutrition regimen. The regimen comprises feeding an infant the set of nutritional compositions at specific ages as mentioned already

An example of the feeding regimen according to the invention is shown below.

| Infant Age | Quantity per feed | Feed per day |
|---|---|---|
| | | |
| 1st and 2nd week | 1 capsule/90ml | 5-7 |
| 3rd and 4th week | 1 capsule/120ml | 5-7 |
| | | |
| 2nd Month | 1 capsule/150ml | 4-6 |
| 2nd Month | 1 capsule/180ml | 3-5 |
| | | |
| 3rd to 6th Month | 1 capsule/180 ml | 3-5 |
| 3rd to 6th Month | 1 capsule/210 ml | 2-4 |
| | | |
| 7th to 12th Month | 1 capsule/240 ml | 2-3 |

Complementary foods can also be taken with the set of nutritional compositions. The complimentary food may be any of the foods available for the corresponding age range. These complimentary foods include pureed vegetables, meats, fish, fruits, etc.

It has been found that such a regimen provides a child with a balanced nutritional intake at least for the first two years of life and has long-term health benefits on the infant/young child later in life.

The invention also pertains to an age-tailored kit for infants and young children. The kit comprises the set of nutritional compositions as described herein. The nutritional compositions are packed in single dose units as mentioned. The single dose units may be in the form of stick packs or sachets.

The single dose units may be disposable capsules equipped with opening means contained within the capsule to permit draining of the reconstituted formula directly from the capsule into a receiving vessel such as a bottle. Such a method of using capsules for dispensing an infant or young child nutritional composition is described in WO2006/077259. The different nutritional compositions forming part of the set of the invention may be packed into individual capsules and presented to the consumer in multipacks containing a sufficient number of capsules to meet the requirements of infants and young children one week for example. Suitable capsule constructions are disclosed in WO2003/059778.

The present invention is further illustrated hereinafter by means of the following non-limiting examples.

### Examples

### Example 1: An age tailored set of nutritional compositions is shown below.

| Composition | 1^{st} | 2^{nd} | 3^{rd} | 4^{th} | 5^{th} |
|---|---|---|---|---|---|
| Energy Kcal/100ml | 67 | 65 | 63 | 63 | 63 |

**Protein content:**

| Composition | 1^{st} | 2^{nd} | 3^{rd} | 4^{th} | 5^{th} |
|---|---|---|---|---|---|
| Protein g/L | 14.5-15.2 | 12.5-13 | 11.8 | 11.7-19.2 | 12.8-19.5 |
| Protein g/100Kcal | 2.18-2.26 | 1.93-2.01 | 1.88 | 1.86-3.04 | 1.9-3.1 |

**Fat content:**

| Composition | 1^{st} | 2^{nd} | 3^{rd} | 4^{th} | 5^{th} |
|---|---|---|---|---|---|
| Fat g/L | 37.8 | 33.6 | 32.1 | 35.3 | 35.3 |
| Fat g/100Kcal | 5.64 | 5.19 | 5.11 | 5.61 | 5.61 |

**Carbohydrate content:**

| Composition | 1^{st} | 2^{nd} | 3^{rd} | 4^{th} | 5^{th} |
|---|---|---|---|---|---|
| Carbohydrate (100% lactose) | 62-67 | 73.8-73.3 | 73 | 58.2-66.1 | 58.1-67.1 |
| Carbohydrate g/100Kcal | 10.1 | 11.4 | 11.6 | 9.2-10.5 | 9.2-10.6 |

### Example 2 : Another set of nutritional composition is shown in the below.

| | Formula | | | | |
|---|---|---|---|---|---|
| | Composition | 1^{st} | 2^{nd} | 3^{rd} | 4th |
| Basics | Reconstitution RTD Volume (ml) | 100 to 200 | 230 | 230 | 230 |
| | | | | | |
| | Energy density (kcal/100 ml) | 65 | 64 | 62.5 | 63 |
| Protein | Content (g/100kcal) | 1.8 - 2.25 | 1.8 | 2 | 2.25 |
| | Content (g/1) | 11.3 - 15.1 | 11.3 | | |
| | Whey: Casein | 70:30 | 50:50 | 50:50 | 40:60 |
| | Functional proteins | . | | | - |
| Carbo-hydrat es | Type | Lactose | Lactose | Lactose / MD DE19 (70:30) | Lactos e / MD DE19 (70:30 ) |
| | Content (g/100kcal) | 9.7 to 11.6 | 10.6 | 10.6 | 14.2 |
| | Content (g/1) | 65.0 to 73.5 | 66.8 | | |
| Lipids | Type | Milk & Veg. | Milk & Veg. | Milk & Veg. | Fat mix follow s AHA: sat. Fat <7%E + polyun s. <10%E LA/ALA 5.0 |
| | Content (g/100kcal) | 5.1 to 5.8 | 5.6 | 5.6 | 4 |
| | content (as % of total energy) | 45.9 to 52.2 | 48% to 52 % | 48% to 52% | 32% to 42% |
| | Content (g/l) | 32.1 to 38.9 | 35.3 | | |
| | LC-PUFA | DHA + ARA | DHA + ARA | DHA + ARA | DHA 0.3%tf a |
| Solubl e Fibers | Content (g/100kcal) | | | | |
| Probio tics | Type | *B. lactis* | | | |
| | Content | 2x 10⁷cfu/g | | | |
| Nucleo tides | CMP (mg/100 kcal) | 1.1 | - | | - |
| | UMP | 0.7 | - | | - |
| | AMP | 0.7 | - | | - |
| | GMP | 0.2 | - | | - |
| | NucleoPremix | | - | | - |
| Minerals (/100kc al) | Na (mg) | 25 to 37.5 | 25 | 25 | - |
| | K (mg) | 80 to 95 | 80 | 80 | - |
| | *Na*/*K (molar ratio)* | *0.53 to 0.67* | *0.53* | *0.53* | - |
| | *(Na+K)*/*Cl molar ratio* | *1.71 to 181* | *1*.*71* | *1*.*71* | - |
| | Cl (mg) | 65 to 80 | 65 | 65 | - |
| | Ca (mg) | 60 | 60 | 80 | 80 |
| | P (mg) | 33 | 33 | 50 | 50 |
| | Mg (mg) | 7 | 7 | 10 | 10 |
| | Mn (µg) | 5 | 5 | - | - |
| | Ca/P | 1.8 | 1.8 | 1.6 | 1.6 |
| Vitamins (/100kc al) | Vit. A (mg RE) | 0.09 to 01125 | 0.09 | 0.06 | 0.06 |
| | Beta carotene (µg) | | | | |
| | Vit. D (mg) | 0.0015 | 0.0015 | 0.0018 | 0.0018 |
| | Vit. E (mg) | 1.3 | 1.3 | 1.3 | 1.3 |
| | Vit. K1 (µg) | 8 | 8 | 4 | 4 |
| | Vit. C (mg) | 15 | 15 | 10 | 10 |
| | Vit. B1 (mg) | 0.07 to 0.1 | 0.1 | 0.08 | 0.08 |
| | Vit. B2 (mg) | 0.1 | 0.1 | 0.08 | 0.08 |
| | Niacin (mg) | 0.5 | 0.5 | 0.8 | 0.8 |
| | Vit. B6 (mg) | 0.05 | 0.05 | 0.07 | 0.07 |
| | Folic acid (µg) | 15 to 16 | 15 | 15 | 15 |
| | Pantothenic Acid (mg) | 0.7 to 0.8 | 0.8 | 0.4 | 0.4 |
| | Vit. B12 (µg) | 0.2 | 0.2 | 0.15 | 0.15 |
| | Biotin (µg) | 2 | 2 | 1.5 | 1.5 |
| | Choline (mg) | 20 | 20 | 30 | 30 |
| | Inositol (mg) | 25 | 20 | - | - |
| | Taurine (mg) | 8 | 6 | - | - |
| | Carnitine (mg) | 1.5 | - | - | - |
| Trace Elements (/100kc al) | Fe (mg) | 0.7 | 1 | 1 | 1 |
| | I (µg) | 15 to 20 | 20 | 15 | 15 |
| | Cu (mg) | 0.06 to 0.08 | 0.06 | 0.05 | 0.05 |
| | Zn (mg) | 1 to 1.2 | 0.8 | 0.6 | 0.6 |
| | Se (µg) | 3 to 4 | 3 | 3.5 | 3.5 |
| | F (µg) | | - | - | - |

The invention also relates to an infant/young child nutrition regimen. The infant/young child nutrition regimen comprises feeding an infant
- a first composition for infants between 0 and 4 weeks having a caloric density of between more than 66 and 69 kcal/100mL,
- a second composition for infants between 4 and 8 weeks having a caloric density of between 63 and 66 kcal/100mL; and
- a third composition for infants between 3 and 6 months having a caloric density of between 61 and 64.5 kcal/100mL,
wherein the energy density of the first composition is higher than the energy density of the second composition,
and wherein the energy density of the second composition is higher than the energy density of the third composition.

The infant/young child nutrition regimen may further comprise feeding the infant between 7 to 12 months the fourth nutritional composition having a caloric density of between 61.5 and 64.5 kcal/100mL and complimentary food foods such that the total daily intake is as recommended by general recommendations. Furthermore where the fourth nutritional composition is used the infant/young child nutrition regimen may further comprise feeding the infant aged between 13 and 24 months the fifth nutritional composition having a caloric density of between 61 and 65 kcal/100mL and complimentary food foods such that the total daily intake is as recommended by general recommendations.

What is desired to be protected by letters patent is set forth in the following claims.

## Claims

1. A set of nutritional compositions for infants, the set comprising:
- a first composition for infants between 0 and 4 weeks having a caloric density of between more than 66 and 69 kcal/100mL,
- a second composition for infants between 4 and 8 weeks having a caloric density of between 63 and 66 kcal/100mL; and
- a third composition for infants between 3 and 6 months having a caloric density of between 61 and 64.5 kcal/100mL,
wherein the energy density of the first composition is higher than the energy density of the second composition,
and wherein the energy density of the second composition is higher than the energy density of the third composition.

2. The set according to claim 1 further comprising a fourth composition for between 7 and 12 months of age having a caloric density of between 61.5 and 64.5 kcal/100mL.

3. The set according to claim 2 further comprising a fifth composition for between 13 and 24 months of age having a caloric density of between 61 and 65 kcal/100mL.

4. The set according to any one of the above claims, wherein the fat content of the first composition is between 48 and 54% of the total energy for said first composition, and/or the fat content of the second composition is between 48 and 54% of the total energy for said second composition, and/or the fat content of the third composition is between 48 and 54% of the total energy for said third composition, and/or the fat content of the optional fourth composition is between 35 and 45% of the total energy for said fourth composition; and/or the fat content of the optional fifth composition is between 35% and 45% of the total energy for said fifth composition.

5. The set according to any of the preceding claims, wherein the protein content of the first composition is between 7% and 9 % of the total energy for said first composition, and/or the protein content of the second composition is between 7.5% and 8.5% of the total energy for said second composition, and/or the protein content of the third composition is between 7.5% and 8.5% of the total energy for said third composition, and/or the protein content of the optional fourth composition is between 8.5% and 10% of the total energy for said fourth composition; and/or the protein content of the optional fifth composition is between 8.5% and 12% of the total energy for said fifth composition.

6. The set according to any of the preceding claims, wherein the carbohydrate content of the first composition is between 35% and 48% of the total energy for said first composition, and/or the carbohydrate content of the second composition is between 40% and 45% of the total energy for said second composition, and/or the carbohydrate content of the third composition is between 42% and 48% of the total energy for said third composition, and/or the carbohydrate content of the optional fourth composition is between 45% and 60% of the total energy for said fourth composition; and/or the carbohydrate content of the optional fifth composition is between 50% and 60% of the total energy for said fifth composition.

7. The set according to any of the preceding claims, wherein any of the first, second, third, fourth or fifth compositions comprises long-chain polyunsaturated fatty acids selected from docosahexaenoic acid (DHA), arachidonic acid (ARA), oligosaccharides, probiotics, prebiotics and any mixtures thereof.

8. The set according to any of the preceding claims, wherein any of the first, second, third, fourth or fifth composition comprises vitamins, minerals, trace elements, lactoferrin, probiotics, prebiotics, proteins such as MFGM, hydrolysed or non-hydrolysed protein, carbohydrates such as lactose, maltodextrin, and any mixtures thereof.

9. The set according to any of the preceding claims, wherein the nutritional compositions are in the form of a powder to be reconstituted or a concentrate to be diluted.

10. The set according to any of the preceding claims, for use in a method for reducing obesity or diabetes or the risk thereof later in life.

11. The set according to any of the preceding claims, for use in a method for reducing cardiovascular diseases or the risk thereof later in life.

12. A method for providing nutrition to an infant in at least the first two years of life comprising feeding to an infant a set of nutritional compositions according to any of claims 1 to 11 at the corresponding ages.

13. The method according to claim 12, wherein the nutritional compositions are packed in single dose units, each single dose unit comprising sufficient nutritional composition to prepare a single serving upon reconstitution with water.

14. An age-tailored nutrition kit for infants and young children comprising the set of nutritional compositions according to any of claims 1 to 11, wherein the nutritional compositions are packed in single dose units, each single dose unit comprising sufficient nutritional composition to prepare a single serving upon reconstitution with water.

15. The age-tailored nutrition kit according to claim 14 wherein the single dose units are in a form of a capsule.

## Patentansprüche

1. Satz von Nährstoffzusammensetzungen für Säuglinge, wobei der Satz Folgendes umfasst:
- eine erste Zusammensetzung für Säuglinge zwischen 0 und 4 Wochen mit einer Kaloriendichte von zwischen mehr als 66 und 69 kcal/100 ml,
- eine zweite Zusammensetzung für Säuglinge zwischen 4 und 8 Wochen mit einer Kaloriendichte von zwischen 63 und 66 kcal/100 ml; und
- eine dritte Zusammensetzung für Säuglinge zwischen 3 und 6 Monaten mit einer Kaloriendichte von zwischen 61 und 64,5 kcal/100 ml,
wobei die Energiedichte der ersten Zusammensetzung höher ist als die Energiedichte der zweiten Zusammensetzung,
und wobei die Energiedichte der zweiten Zusammensetzung höher ist als die Energiedichte der dritten Zusammensetzung.

2. Satz nach Anspruch 1, ferner umfassend eine vierte Zusammensetzung für ein Alter zwischen 7 und 12 Monaten mit einer Kaloriendichte von zwischen 61,5 und 64,5 kcal/100 ml.

3. Satz nach Anspruch 2, ferner umfassend eine fünfte Zusammensetzung für ein Alter zwischen 13 und 24 Monaten mit einer Kaloriendichte von zwischen 61 und 65 kcal/100 ml.

4. Satz nach einem der vorstehenden Ansprüche, wobei der Fettgehalt der ersten Zusammensetzung zwischen 48 und 54 % der Gesamtenergie für die erste Zusammensetzung beträgt und/oder der Fettgehalt der zweiten Zusammensetzung zwischen 48 und 54 % der Gesamtenergie für die zweite Zusammensetzung beträgt, und/oder der Fettgehalt der dritten Zusammensetzung zwischen 48 und 54 % der Gesamtenergie für die dritte Zusammensetzung beträgt, und/oder der Fettgehalt der optionalen vierten Zusammensetzung zwischen 35 und 45 % der Gesamtenergie für die vierte Zusammensetzung beträgt; und/oder der Fettgehalt der optionalen fünften Zusammensetzung zwischen 35 % und 45 % der Gesamtenergie für die fünfte Zusammensetzung beträgt.

5. Satz nach einem der vorstehenden Ansprüche, wobei der Proteingehalt der ersten Zusammensetzung zwischen 7 % und 9 % der Gesamtenergie für die erste Zusammensetzung beträgt und/oder der Proteingehalt der zweiten Zusammensetzung zwischen 7,5 % und 8,5 % der Gesamtenergie für die zweite Zusammensetzung beträgt, und/oder der Proteingehalt der dritten Zusammensetzung zwischen 7,5 % und 8,5 % der Gesamtenergie für die dritte Zusammensetzung beträgt, und/oder der Proteingehalt der optionalen vierten Zusammensetzung zwischen 8,5 % und 10 % der Gesamtenergie für die vierte Zusammensetzung beträgt; und/oder der Proteingehalt der optionalen fünften Zusammensetzung zwischen 8,5 % und 12 % der Gesamtenergie für die fünfte Zusammensetzung beträgt.

6. Satz nach einem der vorstehenden Ansprüche, wobei der Kohlenhydratgehalt der ersten Zusammensetzung zwischen 35 % und 48 % der Gesamtenergie für die erste Zusammensetzung beträgt und/oder der Kohlenhydratgehalt der zweiten Zusammensetzung zwischen 40 % und 45 % der Gesamtenergie für die zweite Zusammensetzung beträgt, und/oder der Kohlenhydratgehalt der dritten Zusammensetzung zwischen 42 % und 48 % der Gesamtenergie für die dritte Zusammensetzung beträgt, und/oder der Kohlenhydratgehalt der optionalen vierten Zusammensetzung zwischen 45 % und 60 % der Gesamtenergie für die vierte Zusammensetzung beträgt; und/oder der Kohlenhydratgehalt der optionalen fünften Zusammensetzung zwischen 50 % und 60 % der Gesamtenergie für die fünfte Zusammensetzung beträgt.

7. Satz nach einem der vorstehenden Ansprüche, wobei jede der ersten, zweiten, dritten, vierten oder fünften Zusammensetzung langkettige mehrfach ungesättigte Fettsäuren umfasst, die ausgewählt sind aus Docosahexaensäure (DHA), Arachidonsäure (ARA), Oligosacchariden, Probiotika, Präbiotika und beliebigen Mischungen davon.

8. Satz nach einem der vorstehenden Ansprüche, wobei jede der ersten, zweiten, dritten, vierten oder fünften Zusammensetzung Vitamine, Mineralien, Spurenelemente, Lactoferrin, Probiotika, Präbiotika, Proteine wie MFGM, hydrolysiertes oder nicht hydrolysiertes Protein, Kohlenhydrate wie Lactose, Maltodextrin und beliebige Mischungen davon umfasst.

9. Satz nach einem der vorstehenden Ansprüche, wobei die Nährstoffzusammensetzungen in Form eines zu rekonstituierenden Pulvers oder eines zu verdünnenden Konzentrats vorliegen.

10. Satz nach einem der vorstehenden Ansprüche zur Verwendung in einem Verfahren zur Verringerung von Fettleibigkeit oder Diabetes oder des Risikos dafür später im Leben.

11. Satz nach einem der vorstehenden Ansprüche zur Verwendung in einem Verfahren zur Verringerung von Herz-Kreislauf-Erkrankungen oder des Risikos dafür später im Leben.

12. Verfahren zum Bereitstellen von Ernährung für einen Säugling in mindestens den ersten zwei Lebensjahren, umfassend das Füttern eines Säuglings mit einem Satz von Nährstoffzusammensetzungen nach einem der Ansprüche 1 bis 11 im entsprechenden Alter.

13. Verfahren nach Anspruch 12, wobei die Nährstoffzusammensetzungen in Einzeldosiseinheiten verpackt sind, wobei jede Einzeldosiseinheit ausreichend Nährstoffzusammensetzung umfasst, um bei Rekonstitution mit Wasser eine Einzelportion herzustellen.

14. Altersangepasstes Ernährungskit für Säuglinge und Kleinkinder, umfassend den Satz von Nährstoffzusammensetzungen nach einem der Ansprüche 1 bis 11, wobei die Nährstoffzusammensetzungen in Einzeldosiseinheiten verpackt sind, wobei jede Einzeldosiseinheit ausreichend Nährstoffzusammensetzung umfasst, um eine Einzelportion nach Rekonstitution mit Wasser herzustellen.

15. Altersangepasstes Ernährungskit nach Anspruch 14, wobei die Einzeldosiseinheiten in Form einer Kapsel vorliegen.

## Revendications

1. Ensemble de compositions nutritionnelles pour nourrissons, l'ensemble comprenant :
- une première composition pour nourrissons entre 0 et 4 semaines ayant une densité calorique comprise entre plus de 66 et 69 kcal/100 mL,
- une deuxième composition pour nourrissons entre 4 et 8 semaines ayant une densité calorique comprise entre 63 et 66 kcal/100 mL ; et
- une troisième composition pour nourrissons entre 3 et 6 mois ayant une densité calorique comprise entre 61 et 64,5 kcal/100 mL,
dans lequel la densité énergétique de la première composition est supérieure à la densité énergétique de la deuxième composition,
et dans lequel la densité énergétique de la deuxième composition est supérieure à la densité énergétique de la troisième composition.

2. Ensemble selon la revendication 1 comprenant en outre une quatrième composition pour un âge compris entre 7 et 12 mois ayant une densité calorique comprise entre 61,5 et 64,5 kcal/100 mL.

3. Ensemble selon la revendication 2 comprenant en outre une cinquième composition pour un âge compris entre 13 et 24 mois ayant une densité calorique comprise entre 61 et 65 kcal/100 mL.

4. Ensemble selon l'une quelconque des revendications précédentes, dans lequel la teneur en matières grasses de la première composition est comprise entre 48 et 54 % de l'énergie totale pour ladite première composition, et/ou la teneur en matières grasses de la deuxième composition est comprise entre 48 et 54 % de l'énergie totale pour ladite deuxième composition, et/ou la teneur en matières grasses de la troisième composition est comprise entre 48 et 54 % de l'énergie totale pour ladite troisième composition, et/ou la teneur en matières grasses de la quatrième composition éventuelle est comprise entre 35 et 45 % de l'énergie totale pour ladite quatrième composition ; et/ou la teneur en matières grasses de la cinquième composition éventuelle est comprise entre 35 % et 45 % de l'énergie totale pour ladite cinquième composition.

5. Ensemble selon l'une quelconque des revendications précédentes, dans lequel la teneur en protéines de la première composition est comprise entre 7 % et 9 % de l'énergie totale pour ladite première composition, et/ou la teneur en protéines de la deuxième composition est comprise entre 7,5 % et 8,5 % de l'énergie totale pour ladite deuxième composition, et/ou la teneur en protéines de la troisième composition est comprise entre 7,5 % et 8,5 % de l'énergie totale pour ladite troisième composition, et/ou la teneur en protéines de la quatrième composition éventuelle est comprise entre 8,5 % et 10 % de l'énergie totale pour ladite quatrième composition ; et/ou la teneur en protéines de la cinquième composition éventuelle est comprise entre 8.5 % et 12 % de l'énergie totale pour ladite cinquième composition.

6. Ensemble selon l'une quelconque des revendications précédentes, dans lequel la teneur en glucides de la première composition est comprise entre 35 % et 48 % de l'énergie totale pour ladite première composition, et/ou la teneur en glucides de la deuxième composition est comprise entre 40 % et 45 % de l'énergie totale pour ladite deuxième composition, et/ou la teneur en glucides de la troisième composition est comprise entre 42 % et 48 % de l'énergie totale pour ladite troisième composition, et/ou la teneur en glucides de la quatrième composition éventuelle est comprise entre 45 % et 60 % de l'énergie totale pour ladite quatrième composition ; et/ou la teneur en glucides de la cinquième composition éventuelle est comprise entre 50 % et 60 % de l'énergie totale pour ladite cinquième composition.

7. Ensemble selon l'une quelconque des revendications précédentes, dans lequel l'une quelconque des première, deuxième, troisième, quatrième ou cinquième compositions comprend des acides gras polyinsaturés à longue chaîne choisis parmi acide docosahexaénoïque (DHA), acide arachidonique (ARA), des oligosaccharides, des probiotiques, des prébiotiques, et n'importe lesquels de leurs mélanges.

8. Ensemble selon l'une quelconque des revendications précédentes, dans lequel l'une quelconque de la première, deuxième, troisième, quatrième ou cinquième composition comprend des vitamines, des minéraux, des oligoéléments, de la lactoferrine, des probiotiques, des prébiotiques, des protéines telles que MFGM, une protéine hydrolysée ou non hydrolysée, des glucides tels que le lactose, la maltodextrine, et n'importe lesquels de leurs mélanges.

9. Ensemble selon l'une quelconque des revendications précédentes, dans lequel les compositions nutritionnelles sont sous la forme d'une poudre à reconstituer ou d'un concentré à diluer.

10. Ensemble selon l'une quelconque des revendications précédentes, pour utilisation dans un procédé de réduction d'obésité ou de diabète ou du risque de ceux-ci plus tard dans la vie.

11. Ensemble selon l'une quelconque des revendications précédentes, pour utilisation dans un procédé de réduction de maladies cardiovasculaires ou du risque de celles-ci plus tard dans la vie.

12. Procédé pour fournir une nutrition à un nourrisson au moins dans les deux premières années de la vie comprenant le fait de donner pour alimentation à un nourrisson un ensemble de compositions nutritionnelles selon l'une quelconque des revendications 1 à 11 aux âges correspondants.

13. Procédé selon la revendication 12, dans lequel les compositions nutritionnelles sont emballées en unités à dose unique, chaque unité à dose unique comprenant une composition nutritionnelle en suffisance pour préparer une portion unique lors d'une reconstitution avec de l'eau.

14. Trousse nutritionnelle adaptée à l'âge pour nourrissons et jeunes enfants comprenant l'ensemble de compositions nutritionnelles selon l'une quelconque des revendications 1 à 11, dans laquelle les compositions nutritionnelles sont emballées dans des unités à dose unique, chaque unité à dose unique comprenant une composition nutritionnelle en suffisance pour préparer une portion unique lors d'une reconstitution avec de l'eau.

15. Trousse nutritionnelle adaptée à l'âge selon la revendication 14 dans laquelle les unités à dose unique sont sous une forme d'une capsule.
